# EUROPEAN PATENT SPECIFICATION

(11) **EP 1 815 938 B1**
(45) Date of publication and mention of the grant of the patent: **21.10.2009**
(21) Application number: 06388006.6
(22) Date of filing: 06.02.2006
(51) Int. Cl.: B23K 37/02

(54) **Carriage for automating welding, brazing, cutting and surface treatment processes**
Wagen zum Automatisieren von Schweiss-, Löt-, Schneid- und Oberflächenbehandlungsverfahren
Chariot pour l'automatisation des procédés de soudage, de brasage, de coupage et de traitement de surface

(43) Date of publication of application: 08.08.2007
(73) Proprietor: Force Technology, 2605 Brøndby (DK)
(72) Inventor: Christensen, Kim Hardam, 2870 Dyssegard (DK); Larsen, Ulf, 2860 Soborg (DK); Sorensen, Henrik, 2605 Brondby (DK)
(74) Representative: Boesen, Johnny Peder

(56) References cited:
- EP-A- 0 759 337
- US-A- 1 884 826
- US-A1- 2004 026 390
- PAN J; YAN B; GAO L; ZHANG H; LU Q; JIN K: "Crawl-type robot tackles difficult jobs" WELDING JOURNAL, vol. 48, no. 1, January 2005 (2005-01), pages 50-54, XP008066161 Miami, Fla
- PATENT ABSTRACTS OF JAPAN vol. 009, no. 067 (M-366), 27 March 1985 (1985-03-27) & JP 59 199171 A (KOIKE SANSO KOGYO KK), 12 November 1984 (1984-11-12)

## Description

### FIELD OF THE INVENTION

The invention relates to a carriage for automating welding, brazing, cutting, surface treatment processes, etc. where the carriage comprises two sets of wheels, where each wheel in the two sets of wheels is pivotal around an axle, processor means and means for supporting e.g. a welding device. The invention moreover relates to methods for operating such a carriage.

### BACKGROUND OF THE INVENTION

Welding automation using a carriage for transporting a welding device, such as a welding torch, e.g. along a joint between two surfaces to be welded is well known in literature and accepted in the industry as a feasible tool for decreasing the involvement of a skilled human welder.

Several commercially available systems are known. For instance, Bug-O Systems, Gullco and ESAB produce rail-based systems where portable rails using permanent magnets are mounted to the welded structure for carrying and guiding a carriage holding the welding torch along the joint to be welded (vacuum cups are used for attaching the rails to non-ferrous structures). These rails must be mounted quite precisely, which requires a time consuming manual adjustment of the rails, in parallel to the joint in order to obtain a weld of sufficient quality. Furthermore, the rails are stiff and cannot follow small local deviations in the joint trajectory. A human weld operator therefore still has to watch the welding process and do online corrections of the equipment. Further, it is time consuming to lay out the rails arranged for supporting the welding carriage. Additionally, the position of the welding carriage is fixed once the rails have been placed.

Also a wide range of rail-less welding carriages are commercially available from several manufacturers like Bug-O Systems, SAF, ESAB, Fronius, and Migatronic. In general, these simple to use self-propelled carriages are designed for managing simple weld tasks where very primitive guidance mechanisms such as a track, grabbing arm etc. can be applied. Some of the carriages are purely for horizontal welding (e.g. downhand, PA according to EN287), while other carriages are equipped with suspended electro or permanent magnets for use in all position welding. However, there are some obvious disadvantages of these carriages. For instance, the electricity can fail, for which reason the holding force of an electromagnet will vanish, while the holding force of a electromagnet as well as a permanent magnet varies and may drop critically when moving on very curved surfaces, e.g. inside a pipe if the diameter becomes too small.

Patent specification U.S. 5,853,655 discloses a remote controlled welding and cutting carriage equipped with magnetic wheels and one or more automated positioning arms holding e.g. welding torches. This/these motor driven arm(s) with photo sensors will track patterns delineated with a reflective tape etc. A disadvantage of this carriage is that it uses a reflective tape for guidance that very precisely has to be attached or affixed to the subject that is to be welded upon. Such subjects will normally be dirty and/or slightly corroded which further makes the attachment of the reflective tape difficult. Further, the attachment of the tape has to be done manually by a human operator. Additionally, the carriage is incapable of changing direction of movement since none of the wheels are turnable while the same single shaft drives a wheel in each side of the carriage.

Furthermore, European patent specification EP 0 759 337 discloses a rail-less carriage where a permanent magnet is incorporated inside the body of the carriage. A controller ensures that the traveling direction is kept without using any guide or rail. The use of a permanent magnet incorporated inside the body of the carriage does not provide as good a holding force between the magnet and the subject to be welded as required in some situations as there will be some distance between the subject to be welded and the magnet. This could especially be a problem when performing overhead welding inside a tube, pipe or container where there is a lower limit for the size of the respective tube, pipe or container. Further, no disclosure of active control for tracking the weld joint is given.

Patent specification JP 2001179448 discloses a rail-less welding carriage system applicable for automatic overhead welding, which can travel freely on a surface without the use of rails. A main carriage carrying welding equipment e.g. welding machine can freely travel on a shop floor surface, while controlling a smaller carriage connected to the main carriage with a boom. The smaller carriage (e.g. holding the welding torch) is turned around 180 degrees for performing overhead welding. The main carriage comprises a front set and a rear set of wheels. The front set of wheels can be turned in an angle compared to the travel direction thereby regulating the direction of the welding carriage. This welding carriage system is specially constructed for overhead welding.

Patent specification U.S. 6,627,004 also discloses a welding and cutting carriage equipped with magnetic wheels and a positioning arm holding e.g. a welding torch. However, both the carriage and the motor driven arm are purely remote controlled by a human welding operator.

JP 59 199 171 discloses an automated travelling carriage run by an electric motor to guide a cutting or welding torch on the carriage. A guide roller device having two guide pinch rollers at two points on the front and rear of the body of the carriage is provided. A tube-like rail having flexibility is held on, for example a steel plate to be cut, by a coupling fixture containing a magnet. The rail is sandwiched between the rollers and when the carriage is run, the torch is guided along the rail.

Finally, a new type of welding carriage is described in the article: "Crawl-type Robot Tackles Difficult Jobs", Welding Journal, Vol. 84, No. 1, 2005, pp. 50 - 54, Pan, J., Yan, B., Gao, L., Zhang, H., Lu, Q., and Jin, K (XP008 066 161), which discloses a welding carriage and a method of operating if according to the preambles of the independent claims. This automated carriage uses magnetic tracks consisting of a series of permanent magnet blocks, which are connected by chains, for which reason the carriage crawl on a structure like a military tank moves on the ground. For tracking the joint to be welded, a traditional laser sensor is used that measures the welding joint profile along a line regardless of the orientation of the line with respect to the orientation of the joint.

### SUMMARY OF THE INVENTION

It is an object of the invention to provide an alternative way of regulating the direction of a welding carriage. This object is achieved by a welding carriage comprising two sets of wheels, where each wheel in the two sets of wheels is pivotal around an axle, processor means and means for supporting a welding device, wherein the two sets of wheels comprise a left set of wheels and a right set of wheels and in that processor means is arranged to control the wheels in one set of wheels independently of the wheels in the other set of wheels, **characterized in that** the axles of the wheels in each set of wheels are arranged to be flexed to assume more than one angle compared to a bottom side and/or top side of the welding carriage.

Hereby, the direction as well as the speed of movement of the welding carriage can be controlled by regulating the speed of rotation of the wheels in the left wheel set and in the right wheel set. It should be noted, that during welding operation the welding carriage naturally carries a welding device, such as a welding torch, via the means for supporting a welding device. For other types of operations the carriage may carry other devices e.g. such as a cutting tool. Further, the need for an affixing of separate track rail or alternative mechanical guidance devices are eliminated. Further, it is achieved that the left wheel set and/or the right wheel set can be bent e.g. inwards, i.e. towards the bottom side of the carriage, so that the wheels of the welding carriage will have an appropriate contact with a curved surface of a work piece to be welded. If the wheels are bent outwards, the carriage can be used on the inside of cylinders, pipes, etc. Preferably, said more than one angle comprises angles between -45° and 45°, and more preferably between -30° and 30°.

In another preferred embodiment of the welding carriage, said wheels in the two sets of wheels are magnetic wheels. Hereby, the welding carriage can be used to travel across any surface capable of being magnetized or attracted by a magnet, i.e. also non-horizontal surfaces. Thus, the welding carriage is capable of facilitating welding on flat or curved surfaces regardless of the orientation and slope thereof.

In another preferred embodiment, the welding carriage further comprises a sensor arrangement arranged to detect the position and the direction of a joint to be welded. This detection of the position as well as the direction of the joint can be used in order to control the direction and the speed of movement of the welding carriage to facilitate automated welding without the use of a track or rails or other guidance mechanisms, which have to be fit up and adjusted by a human operator.

In one embodiment of the welding carriage, the sensor arrangement is a laser sensor arrangement arranged to emit at least two laser beams and to detect reflections of said at least two laser beams from a work piece.

Preferably, the at least two laser beams, e.g. projected onto the workpiece as lines perpendicular to the joint (when the carriage is moving along the joint), are arranged so that the distance between the lines on the workpiece are in the range of about a few to some tens of millimetres, e.g. between 5 mm and 30 mm, depending on the joint to be welded. More than two laser beams could be used, e.g. the use of three laser beams would render more stable and/or accurate detections of the position and direction of a joint to be welded. It should be noted that the term "laser sensor arrangement" is meant to cover any laser module with means for generating a laser beam as well as detectors, such as CCD cameras, to detect reflections of the laser beam.

In an alternative, preferred embodiment of the welding carriage according to the invention, the welding carriage further comprises means for tactilely detecting the position of a rail placed along a joint to be welded. This rail can be placed on the work piece to be welded in a certain distance from the joint to be welded so that the welding carriage can sense the position of the rail and thereby determine the position of the joint to be welded. The rail can be any rail the presence of which can be detected tactilely by welding carriage; however, if the work piece to be welded is magnetizable, a magnetic rail is useful in that in can be placed and removed easily. Typically, the means for tactilely detecting the position of a rail is arranged for detecting the position of a relatively small rail, e.g. a rail having a rectangular cross section with dimensions of some millimetres to some centimetres. The use of tactilely detecting of the position may e.g. be useful when the carriage is used for cutting as there will not be a welding joint to navigate after.

In yet a preferred embodiment of the welding carriage according to the invention further comprises a welding device and the processor means are arranged for controlling welding parameters of said welding device on basis of joint geometry measurements using the laser sensor arrangement. Such welding parameters are e.g. the current or voltage applied to the welding device, the welding speed, the wire feed speed, etc. Hereby, a fully automated welding carriage arranged to determine the position and direction of a joint to be welded and to perform an appropriate welding of the joint whilst moving along the joint without the use of rails or other guidance mechanisms, which have to be fit up/adjusted by a human operator is achieved. The joints, which can be welded, comprise but are not limited to: V-groove joints, butt joints, lap joints and fillet welds. Preferably, the controlling of welding parameters is based on a mathematical model, said mathematical model being either empirical, based on general laws of physics or a combination thereof. Such a combination could be the use of a model based on general laws of physics calibrated by means of empirical results. Advantageously, the mathematical model could also be based on neural networks.

It should be noted that the above control of welding parameters are particularly advantageous in welding the root pass (also denoted root run) between two work pieces to be welded in joint welding. Traditionally, the welding of such a root pass has involved a piece of heat resisting material, e.g. ceramics, placed underneath the joint, which piece has been arranged to carry the melted welding material having passed through the joint to be welded. With the above control of welding parameters the presence of such a piece of ceramics can be avoided, in that the welding process can be controlled so that substantially no melted welding material passes through the joint. Hereby, the placing and holding of the piece of ceramics can be avoided, and work pieces, such as small containers, where the placing of such a piece of ceramics is impossible, can be welded by the inventive welding carriage.

The invention moreover relates to a method of operating a welding carriage having features and advantages corresponding to the welding carriage.

### BRIEF DESCRIPTION OF THE DRAWINGS

The invention will be explained more fully below in connection with examples of preferred embodiments and with reference to the drawing, in which:
Fig. 1 is a schematic drawing of a welding carriage according to the invention;
Fig. 2a is a cross section along the line II-II in Fig. 1;
Fig. 2b is a cross section corresponding to the cross section in Fig. 2a, but with the axles of the wheels flexed the angle v;
Fig. 3 is a schematic drawing of an embodiment of a laser sensor arrangement used in the welding carriage according to the invention;
Fig. 4 is a block diagram of the components of the welding carriage and processor and control means;
Fig. 5 is a schematic drawing corresponding to Fig. 1, but including a welding device and a sensor arrangement;
Fig. 6 is a flow diagram of a method of operating a welding carriage according to the invention;
Fig. 7 is a schematic diagram of a welding carriage according to one embodiment of the present invention seen from above; and
Fig. 8 is a schematic drawing illustrating an example of how the wheels may be arranged to move.

Throughout the figures identical reference numerals denote identical components.

### DESCRIPTION OF PREFERRED EMBODIMENTS

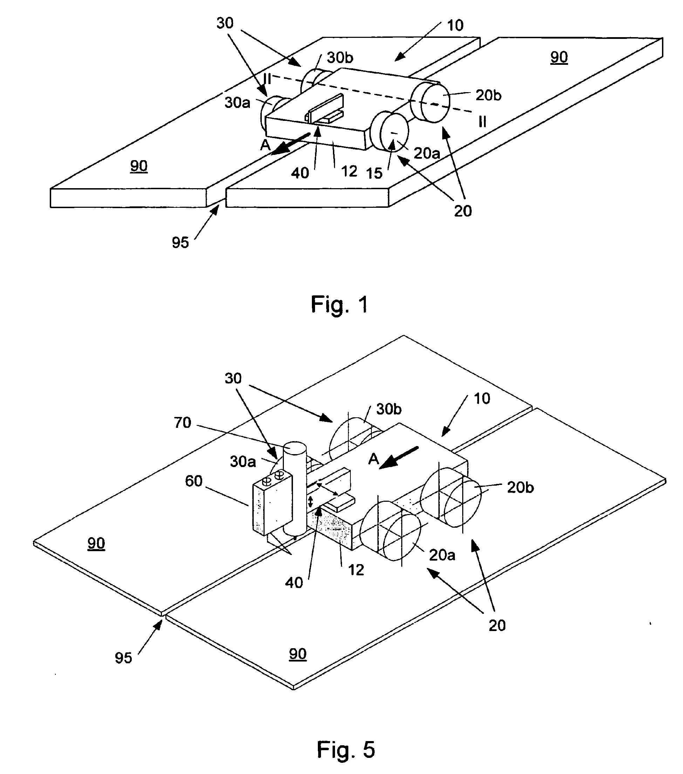

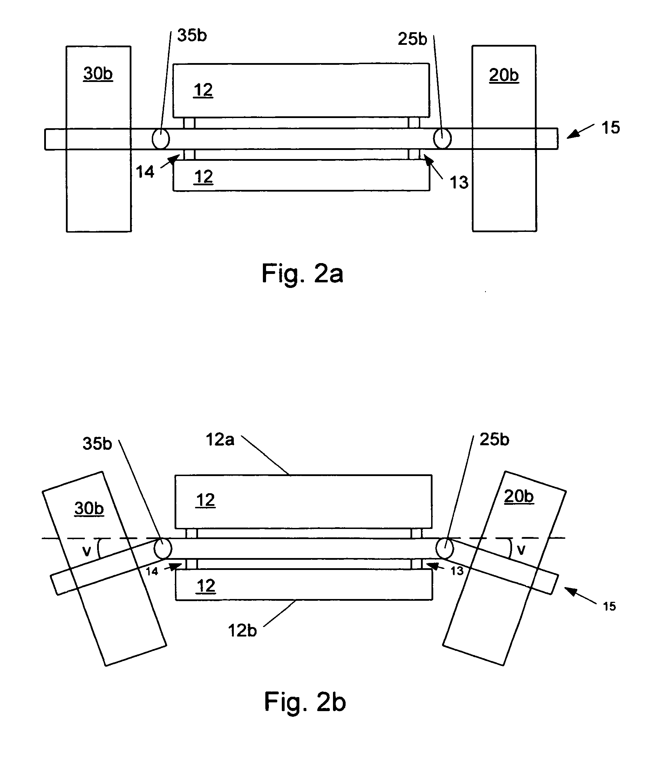

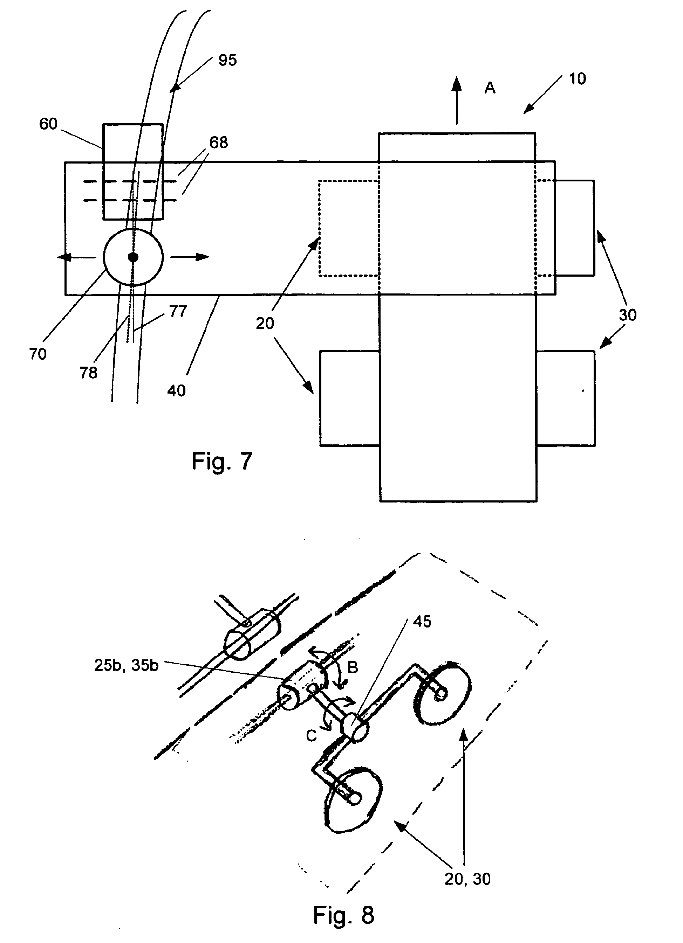

Fig. 1 is a schematic drawing of a welding carriage 10 according to an embodiment of the invention. The welding carriage 10 is placed upon a work piece 90 having a joint 95 which is to be welded. The welding carriage 10 has a direction of movement indicated by the arrow A. The welding carriage 10 has a body 12 and two sets of wheels 20, 30, whereof one set of wheels 20 is a left set of wheels 20a, 20b and the other set of wheels is a right set of wheels 30a, 30b, where the indications "left" and "right" correspond to the wheels on the left and right side, respectively, of the welding carriage when this is seen from above in such an orientation that the direction of movement is forward. Each wheel is pivotal around an axle 15 extending through the body 12 of the welding carriage 10 (also see Figs. 2a and 2b). Also shown in Fig. 1 is adjustable means 40 for supporting a welding device, such as a welding torch or a cutting device or another device. When the welding carriage is applied to welding operations, the means 40 naturally carry an appropriate welding device (not shown in Fig. 1; see e.g. Figs. 5 and 7).

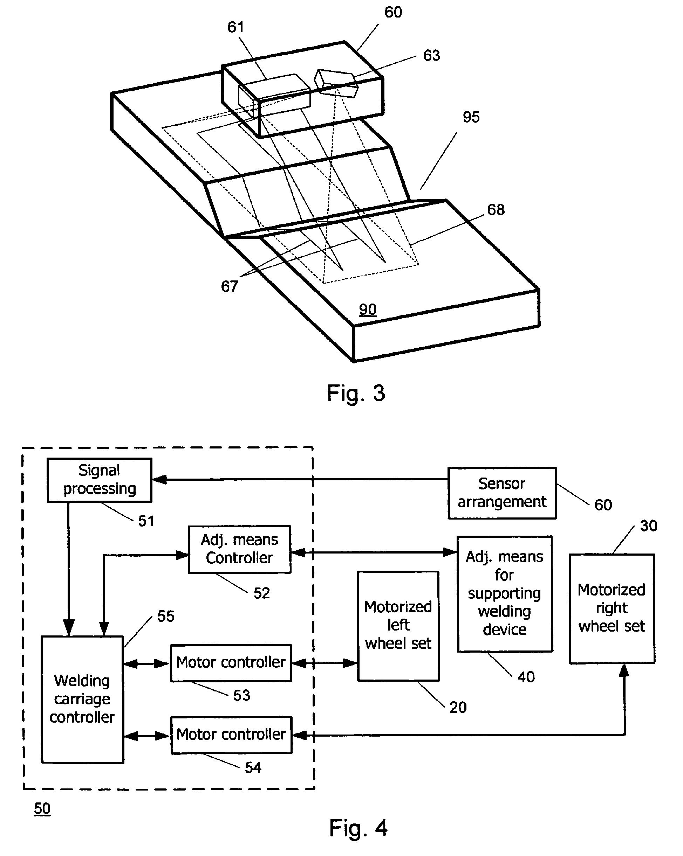

According to a preferred embodiment of the present invention, the welding carriage 10 is sensor guided, as explained in greater detail in connection with Figs. 3-7).

The wheels 20, 30 of the carriage 10 are preferably magnetic wheels thereby enabling the carriage 10 to propel across any surface capable of being magnetized or attracted by a magnet. Furthermore, the mechanical design of the carriage 10 (as explained in greater detail in connection with Figs. 2a and 2b) enables the wheels to be moved very flexibly thereby ensuring a strong magnetic attraction of the wheels to the material to be welded even on highly curved surfaces. Hence, the carriage is capable of facilitating welding on flat or curved surfaces regardless of orientation and slope, e.g. around the circumference of a pipe or in general applicable for all-position welding.

According to the present invention, the left and the right wheel set 20, 30 of the carriage are driven by each their own motor (not shown; see e.g. Fig. 4), e.g. a DC servomotor or the like. Each motor drives the left and the right wheel set of the carriage individually. Consequently, obtaining a difference in the speed the two wheel sets changes the direction of movement of the carriage.

Furthermore, for ensuring an exact positioning horizontally as well as vertically of the welding device proportional to the joint to be welded 95, the adjustable means 40 for supporting a welding device is used. In one embodiment, these means 40 are a cross slide holding the welding device that is mounted on the welding carriage as explained later. The position and orientation of the adjustable means 40 with respect to the carriage typically depends on the particular welding task, e.g. different tasks such as welding of a V-groove, fillet welding, etc. which may require different orientation.

The wheels, when magnetic, will tend to attract dirt such as metal chips etc. appearing in a typical welding environment. In order to reduce and/or eliminate any negative effect on the control quality of the welding carriage of this particular disturbance (magnetically attractable dirt), the wheels are preferably kept clean by mounting a device, which will scrape off such dirt from the wheels.

In order to avoid spatter of molten metal, which may appear in e.g. MIG/MAG welding, i.e. gas shielded metal arc welding, to be attracted by the magnetic wheels, the carriage can be equipped with spatterguards to protect the wheels.

Fig. 2a is a cross section along the line II-II in Fig. 1, i.e. through the axle 15 of the wheels 20b and 30b. The axle 15 extends through the body 12 of the welding carriage and is supported therein by means of two bearings, axle boxes or the like 13, 14. The axle 15 is also shown to comprise two joints 25b, 35b arranged to flex the part of the axle 15 bearing the wheels 20b, 30b into different angles. In Fig. 2a the axle 15 is shown in a non-flexed state corresponding to a fully straight axle 15.

Fig. 2b is a cross section corresponding to the cross section in Fig. 2a, but with the axles of the wheels 20b, 30b flexed the angle v. This angle v will typically lie in the range between -45° and 45°, and more preferably between -30° and 30°. In this description, positively angles denote downwards flexing of the wheels as shown in Fig. 2b, whilst negative angles denote upwards flexing of the wheels and the angle 0° corresponds to Fig. 2a. It should be noted, that the left set of wheels 20 and the right set of wheels 30 not necessarily is flexed by the same angle v, in that it is conceivable that the flexing of one set of wheels differs from the flexing of the other. However, typically the wheels in the each set of wheels will be flexed by the same angle.

In this way, the left wheel set and/or the right wheel set can be bent e.g. inwards, i.e. towards the bottom side of the carriage, so that the wheels of the welding carriage will have an appropriate contact with a curved surface of a work piece to be welded. If the wheels are bent outwards, the carriage can be used on the inside of cylinders, pipes, etc. Preferably, the angle v is selected from angles between -45° and 45°, and more preferably between - 30° and 30°.

It should be noted, that even though Figs. 2a and 2b show the use of two joints 25b, 35b on an axle 15, it is also conceivable to use only one joint one each axle 15. This is especially advantageous if the welding carriage is relatively slim, i.e. that the distance from the right wheels 30a and 30b, respectively, to the left wheels 20a and 20b, respectively, is relatively small.

An alternative arrangement of how the wheels may be arranged to move is shown and explained in connection with Fig. 8.

Fig. 3 is a schematic drawing of an example of a laser sensor arrangement 60 used in the welding carriage according to one embodiment of the present invention. The laser sensor arrangement 60 comprises a laser module 61 comprising, in this embodiment, two laser diodes or other laser sources having line generators. Each laser diode is arranged to emit a laser beam 67 which is to be projected onto a surface of a work piece 90. This is indicated in Fig. 3 by the lines extending below the laser module 61.

The laser arrangement 60 moreover comprises picture or video capturing means like a CCD camera 63 positioned at a triangulation angle to the two laser module 61. The CCD camera 63 are arranged to receive the reflection of the laser beams from the laser module 61 from the surface of the work piece 90. The field of view of the CCD camera 63 is indicated in Fig. 3 by the broken lines 68 extending below the CCD camera 63. Preferably, the two laser diodes is alternating switched on and off so only one of them is on at a single time (or with a limited overlap). In this way, it is very easy to determine from which of the diodes the reflections arises from that the CCD camera is currently is registering. In this way, only a single CCD camera is needed.

A band pass filter (not shown) may be placed in front of the CCD camera in order to filter out noise, remove light with uninteresting wavelengths, and/or the like.

As an alternative the laser module 61 could comprise a single laser diode or the like having optical or other means for generating two separate laser lines along the surface of a work piece. Moreover, more than two scan lines or other geometries than scan lines are conceivable; e.g. three scan lines would render the measurements more reliable or stable. As another alternative, the video or picture capturing means 63 could be substituted by a two or more video or picture capturing means or by a single capturing means where the registered picture is divided into two parts (one for each laser line), which would avoid the need for alternating switching on and off the laser diodes.

Please note, that an optimal distance between the laser scan lines in parallel typically will depend on the specific joint preparation, e.g. joint type, preparation accuracy, quality etc.

In one embodiment, the laser modules further comprises adjustment means for adjusting the distance between the laser scan lines. In a further embodiment, the distance is adjusted automatically, e.g. depending on a given pre-set, on actual automatically measured parameters or a combination thereof.

Due to the capability of this sensor 60 to locate the position and orientation of the joint to be welded, the sensor is very applicable for guiding the carriage and welding device as already described. It has been shown that joints like the V-groove, butt joint, lap joint and fillet weld can be welded in this manner in an automated way.

Fig. 4 is a block diagram of the components of the welding carriage and processing and control means 50. Shown is the welding carriage that comprises a motorized left wheel set 20 and a motorized right wheel set 30, a sensor arrangement 60 and adjustable means 40 for supporting a welding device. The adjustable means for supporting a welding device 40 may e.g. be a so-called motorized cross slide or the like holding the welding device in a well known and controllable way. Assuming that the dynamic performance of this cross slide is good, it may also be used for torch oscillation, if needed. Alternatively, other adjustable means for supporting a welding device 40 may be used (se e.g. Fig. 7 for an example of another layout of the adjustable means 40). The position and orientation of the adjustable means for supporting a welding device with respect to the carriage will typically depend on the particular weld task. The welding carriage moreover comprises processing means 50 for controlling the operation of the welding carriage.

The processing means comprises a signal processing component 51 arranged to receive input from the sensor arrangement 60. The received input is processed in order to derive a joint position, a joint orientation and information about joint geometry, e.g. gap, groove angels, etc., if needed. After processing of the input information the signal processing block 51 outputs a signal with the obtained joint position, joint orientation, etc. to a welding carriage controller 55. The adjustable means controller 52 moreover receives an input signal from the adjustable means 40 with information on the position thereof. The adjustable means controller 52 outputs a signal to the welding carriage controller 55 with information on said position of the adjustable means for supporting welding device as well as a signal to the adjustable means 40 for controlling any adjustment of the position thereof. The welding carriage controller 55 further receives position and velocity from the two motor controllers 53 and 54. Based on the positions of the motorized wheel sets 20, 30 and the adjustable means 40 and the location and orientation of the joint the welding carriage controller 55 derives new reference positions/velocities that is provided to the adjustable means controller 52 and the motor controllers 53 and 54 whereof one motor controller 53 drives the left wheel set 20 of the welding carriage and the other motor controller 54 drives the right wheel set 30.

Preferably, the processor and control means is a model based control system that controls the drives of the carriage in order to make the carriage accurately track the joint to be welded with regard to position as well as velocity (welding speed). In a preferred embodiment, a mathematical model modeling the carriage, the means for supporting a welding device 40, the sensor arrangement 60 and a welding device is used for controlling the drives of the carriage fulfilling the constrains of a given weld task, i.e. the position of the welding torch relative to joint, the welding speed, and e.g. a weaving amplitude, if applicable.

Typically, a total of four drives have to be controlled; the two motors 53, 54 driving the wheel sets independently and, typically, two drives for controlling the motion of the adjustable means for supporting a welding device 40. Assuming that these means 40 is a cross slide characterized by a good dynamic performance, the precise positioning horizontally as well as vertically of the welding torch proportional to the joint to be welded is managed by these adjustable means. Meanwhile the welding carriage just has to be controlled to follow the joint to a certain degree constrained by movement limitations of the adjustable means for supporting a welding device 40, e.g. by stroke lengths of the linear motion slides and the dynamic performance thereof for a cross slide. Obviously, apart from the vertical motion slide the three other drives of the system are coupled.

Fig. 5 is a schematic drawing corresponding to Fig. 1, but including a welding device and a sensor arrangement. Shown is a welding carriage 10 corresponding to the one shown in Figure 1 but where a sensor arrangement 60, preferably a laser sensor arrangement 60, and a welding device 70 is mounted on the carriage 10. In this particular example, the welding device 70 is mounted on the adjustable means 40 for supporting a welding device and the sensor arrangement 60 is located on the welding device 70 so that its scan lines are in front of the carriage 10.

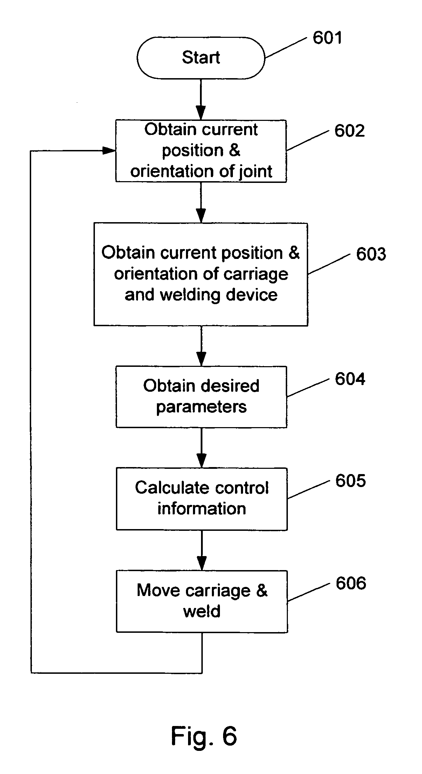

Fig. 6 is a flow diagram of a method of operating a welding carriage according to the invention. The method could be implemented as indicated by Fig. 4. The method starts or initiates at step 601. At step 602 the current (e.g. relative) position and orientation of the joint to be welded is obtained or estimated, preferably using a sensor arrangement as described previously. Preferably, a joint centerline is determined or estimated using image processing.

At step 603, the current (e.g. relative) position and orientation of the carriage and of the welding device is obtained. The position and orientation of the carriage is preferably determined by obtaining position and velocity of each wheel set independently. The position and orientation of the welding device is preferably determined by obtaining a measured position of linear motion slides for the adjustable means (40 in Figs. 1, 4, 5 and 7) for supporting a welding device.

At step 604, a number of desired parameters are provided. The parameters may e.g. include a desired welding speed (i.e. speed of the carriage), a desired position of the welding device, preferably perpendicular to the joint centerline, including weaving amplitude, if applicable,

The desired parameters typically vary with the actual weld task to be performed. A simple well-defined weld task such as fillet weld with very few passes, etc. can be fully automated using constant welding parameters (e.g. wire feed speed, voltage, welding speed, torch oscillation). However, more complex tasks, such as welding of open V-grooves, multi-pass welding, etc. may require a continuous adjustment of significant welding parameters such as welding voltage, current, welding speed, weaving amplitude, stick-out etc.
Therefore, according to a further embodiment, of the present invention, the laser sensor arrangement will not only perform seam tracking but will also measuring characteristic features of the joint to be welded, like the gap or groove angles of an open V-groove, or the like. Based on this information significant welding parameters are adjusted to ensure successful welding even if the joint geometry varies. For this, a mathematical model, e.g. purely based on experiments (empirical model based on classic regression, neural networks etc.), based on general laws of physics or a combination where a model based on general laws of physics is calibrated to multiple experiments is needed.

At step 605, the control information for the carriage and welding device are calculated using the information obtained at steps 602 - 604. Preferably, the derived control information comprises a reference velocity for each of the left and right wheel set, respectively and a reference position and velocity of linear motion for the welding device (via the adjustable means for supporting the welding device).

Please note that typically, the measurements of the joint location as well as geometry at step 602 are acquired at a distance to the welding device. The distance may e.g. be 20 mm to 50 mm. Therefore these measurements are stored in a controller or the like until the welding device reaches the positions of measurements.

At step 606, the derived control information is used and supplied to the relevant parts of the carriage (see e.g. Fig. 4 and related description) and the carriage and welding device are moved accordingly during which a part of the joint is welding.

After step 606 has been done the method repeats steps 602 - 606 while the carriage performs welding operation(s). Preferably, the operation of the carriage and the execution of the steps takes place in real-time, near real-time, or substantially real-time during operation. Alternatively, the operation is performed segments, if needed.

Please note that some of the steps, e.g. steps 602, 603, and 604, may be performed in parallel or substantially in parallel or in a different ordering.

Fig. 7 is a schematic diagram of a welding carriage according to one embodiment of the present invention seen from above. Shown is a welding carriage 10 according one embodiment of the present invention, where the welding carriage 10 is placed upon a work piece having a joint 95 to be welded. The welding carriage 10 has a direction of movement indicated by the arrow A. The welding carriage 10 comprises two sets of wheels 20, 30, controlled independently as explained previously.

Also shown is adjustable means 40 for supporting a welding device, such as a welding torch and a sensor arrangement 60, a laser sensor arrangement in this example, and a welding device 70 being mounted on the adjustable means 40 for supporting a welding device, cutting device, etc. The laser sensor arrangement emits two scan lines that are detected 68 and used as explained previously. Also indicated is a first (77) and a second (78) broken line representing the direction of the carriage and the centerline of the joint, respectively. Based on the information received from the sensor arrangement and information of the location and velocity of the welding device 70 and the two sets of wheels 20, 30 the joint to be welded is followed and welded allowing for precise and automated welding of the joint, even for complex welding tasks.

Fig. 8 is a schematic drawing illustrating an example of how the wheels may be arranged to move. Shown is a set of wheels (20, 30) on one side of the carriage. A corresponding set of wheels is present at the other side of the carriage. In this particular embodiment a set of wheels may be moved by controlling the movement of a joint 25b, 35b arranged to flex the set of wheels into different angles as indicated by the double-arrow B. The joints are preferably not constrained and will thus automatically adjust to the surface that the carriage is located on.

## Claims

1. A welding carriage (10) comprising two sets of wheels (20, 30), where each wheel in the two sets of wheels is pivotal around an axle (15), processor means (50) and means (40) for supporting a welding device, wherein the two sets of wheels (20, 30) comprise a left set of wheels (20a, 20b) and a right set of wheels (30a, 30b) and in that processor means (50) is arranged to control the wheels in one set of wheels (20, 30) independently of the wheels in the other set of wheels (20, 30), **characterized in that** the axles (15) of the wheels in each set of wheels (20, 30) are arranged to be flexed to assume more than one angle compared to a bottom side (12b) and/or top side (12a) of the welding carriage (10).

2. A welding carriage (10) according to claim 1, wherein said more than one angle comprises angles between -45° and 45° and more preferably between -30° and 30°.

3. A welding carriage (10) according to claim 1 or claim 2, wherein said wheels in the two sets of wheels are magnetic wheels.

4. A welding carriage (10) according to any one of the claims 1 to 3, further comprising a sensor arrangement (60) arranged to detect the position and the direction of a joint (95) to be welded.

5. A welding carriage (10) according to claim 4, wherein the sensor arrangement (60) is a laser sensor arrangement (60) arranged to emit at least two laser beams and to detect reflections of said at least two laser beams from a work piece (90).

6. A welding carriage (10) according to any one of the claims 1 to 3, further comprising means for tactilely detecting the position of a rail placed along a joint (95) to be welded.

7. A welding carriage (10) according to claim 4, further comprising a welding device and wherein the processor means (50) are arranged for controlling welding parameters of said welding device on basis of joint geometry measurements using said laser sensor arrangement.

8. A welding carriage (10) according to claim 7, wherein the controlling of welding parameters is based on a mathematical model, said mathematical model being either empirical, based on general laws of physics or a combination thereof.

9. A method (100) for operating a welding carriage (10) comprising two sets of wheels (20, 30), where each wheel in the two sets of wheels (20, 30) is pivotal around an axle (15), processor means (50) and means (40) for supporting a welding device, wherein the processor means (50) controls the wheels in one set of wheels independently of the wheels in the other set of wheels, where the two sets of wheels comprise a left set of wheels and a right set of wheels, **characterized in that** the method further comprises flexing the axles of the wheels in each set of wheels are to assume an angle (v) compared to a bottom and/or top side of the welding carriage, where said angle (v) is different from zero.

10. A method (100) according to claim 9, wherein said angle (v) is an angle in the range between -45° and 45°, preferably between -30° and 30° and more preferably between 0° and 30°.

11. A method (100) according to claim 9 or claim 10, further comprising the steps of emitting at least two laser beams from a laser sensor arrangement (60) on the welding carriage (10) and detecting reflections of said at least two laser beams from a work piece (90) by means of said laser sensor arrangement.

12. A method (100) according to any one of the claims 9 to 11, further comprising a step of tactilely detecting the position of a rail placed along a joint to be welded.

13. A method (100) according to claim 12, further comprising emitting a laser beam and detecting reflections of said laser beam from a work piece by means of a laser sensor arrangement.

14. A method (100) according to claim 11, further comprising the step of controlling welding parameters of a welding device (70) supported by the welding carriage (10) on basis of detections of said reflections from a work piece (90) performed by means of said laser sensor arrangement (60), where the step of controlling the welding parameters is performed by means of said processor means (50).

15. A method (100) according to claim 14, wherein the step of controlling of welding parameters is based on a mathematical model, said mathematical model being either empirical, based on general laws of physics or a combination thereof.

## Patentansprüche

1. Schweißwagen (10), welcher zwei Sätze von Rädern (20, 30), wobei jedes Rad in den zwei Sätzen von Rädern um eine Achse (15) schwenkbar ist, Prozessormittel (50) und Mittel (40) zum Abstützen einer Schweißvorrichtung aufweist, wobei die zwei Sätze von Rädern (20, 30) einen linken Satz von Rädern (20a, 20b) und einen rechten Satz von Rädern (30a, 30b) aufweisen und wobei das Prozessormittel (50) dafür eingerichtet ist, die Räder in einem Satz von Rädern (20, 30) unabhängig von den Rädern in dem anderen Satz von Rädern (20, 30) zu steuern, **dadurch gekennzeichnet, dass** die Achsen (15) der Räder in jedem Satz von Rädern (20, 30) dafür eingerichtet sind, gebogen zu werden, um mehr als einen Winkel relativ zur Unterseite (12b) und/oder Oberseite (12a) des Schweißwagens (10) einzunehmen.

2. Schweißwagen (10) nach Anspruch 1, wobei der mehr als eine Winkel Winkel zwischen -45° und 45° und besonders bevorzugt zwischen -30° und 30° beinhaltet.

3. Schweißwagen (10) nach Anspruch 1 oder Anspruch 2, wobei die Räder in den zwei Sätzen von Rädern magnetische Räder sind.

4. Schweißwagen (10) nach einem der Ansprüche 1 bis 3, welcher ferner eine Sensoranordnung (60) aufweist, die dafür eingerichtet ist, die Position und die Richtung einer zu schweißenden Naht (95) zu detektieren.

5. Schweißwagen (10) nach Anspruch 4, wobei die Sensoranordnung (60) eine Lasersensoranordnung (60) ist, die dafür eingerichtet ist, mindestens zwei Laserstrahlen auszusenden und Reflexionen der mindestens zwei Laserstrahlen von einem Werkstück (90) zu detektieren.

6. Schweißwagen (10) nach einem der Ansprüche 1 bis 3, welcher ferner Mittel zum taktilen Detektieren der Position einer Schiene, die entlang einer zu schweißenden Naht (95) angeordnet ist, aufweist.

7. Schweißwagen (10) nach Anspruch 4, welcher ferner eine Schweißvorrichtung aufweist und wobei das Prozessormittel (50) für das Steuern von Schweißparametern der Schweißvorrichtung auf der Basis von Messungen der Nahtgeometrie unter Verwendung der Lasersensoranordnung eingerichtet ist.

8. Schweißwagen (10) nach Anspruch 7, wobei das Steuern der Schweißparameter auf einem mathematischen Modell beruht, wobei das mathematische Modell entweder empirisch ist oder auf allgemeinen Gesetzen der Physik beruht oder eine Kombination davon ist.

9. Verfahren (100) zum Betreiben eines Schweißwagens (10), welcher zwei Sätze von Rädern (20, 30), wobei jedes Rad in den zwei Sätzen von Rädern (20, 30) um eine Achse (15) schwenkbar ist, Prozessormittel (50) und Mittel (40) zum Abstützen einer Schweißvorrichtung aufweist, wobei das Prozessormittel (50) die Räder in einem Satz von Rädern unabhängig von den Rädern in dem anderen Satz von Rädern steuert, wobei die zwei Sätze von Rädern einen linken Satz von Rädern und einen rechten Satz von Rädern aufweisen, **dadurch gekennzeichnet, dass** das Verfahren ferner das Biegen der Achsen der Räder in jedem Satz von Rädern beinhaltet, so dass sie einen Winkel (v) relativ zur Unterseite und/oder Oberseite des Schweißwagens einnehmen, wobei der Winkel (v) von null verschieden ist.

10. Verfahren (100) nach Anspruch 9, wobei der Winkel (v) ein Winkel im Bereich zwischen -45° und 45°, vorzugsweise zwischen -30° und 30° und weiter bevorzugt zwischen 0° und 30° ist.

11. Verfahren (100) nach Anspruch 9 oder Anspruch 10, welches ferner die Schritte des Aussendens von mindestens zwei Laserstrahlen von einer Lasersensoranordnung (60) auf dem Schweißwagen (10) und des Detektierens von Reflexionen der mindestens zwei Laserstrahlen von einem Werkstück (90) mittels der Lasersensoranordnung beinhaltet.

12. Verfahren (100) nach einem der Ansprüche 9 bis 11, welches ferner einen Schritt des taktilen Detektierens der Position einer Schiene, die entlang einer zu schweißenden Naht angeordnet ist, beinhaltet.

13. Verfahren (100) nach Anspruch 12, welches ferner das Aussenden eines Laserstrahls und das Detektieren von Reflexionen des Laserstrahls von einem Werkstück mittels einer Lasersensoranordnung beinhaltet.

14. Verfahren (100) nach Anspruch 11, welches ferner den Schritt des Steuerns von Schweißparametern einer Schweißvorrichtung (70), die von dem Schweißwagen (10) getragen wird, auf der Basis von Detektionen der Reflexionen von einem Werkstück (90), die mittels der Lasersensoranordnung (60) durchgeführt werden, beinhaltet, wobei der Schritt des Steuerns der Schweißparameter mittels des Prozessormittels (50) durchgeführt wird.

15. Verfahren (100) nach Anspruch 14, wobei der Schritt des Steuerns von Schweißparametern auf einem mathematischen Modell beruht, wobei das mathematische Modell entweder empirisch ist oder auf allgemeinen Gesetzen der Physik beruht oder eine Kombination davon ist.

## Revendications

1. Chariot de soudage (10) comprenant deux ensembles de roues (20, 30), dans lequel chaque roue dans les deux ensembles de roue pivote autour d'un essieu (15), des moyens de processeur (50) et des moyens (40) pour supporter un dispositif de soudage, dans lequel les deux ensembles de roues (20, 30) comprennent un ensemble gauche de roues (20a, 20b) et un ensemble droit de roues (30a, 30b), et les moyens de processeur (50) sont agencés de manière à commander les roues dans un premier ensemble de roues (20, 30) indépendamment des roues dans l'autre ensemble de roues (20, 30), **caractérisé en ce que** les essieux (15) des roues dans chaque ensemble de roues (20, 30) sont agencés de manière à être fléchis pour se positionner selon plusieurs angles par rapport à un côté inférieur (12b) et/ou à un côté supérieur (12a) du chariot de soudage (10).

2. Chariot de soudage (10) selon la revendication 1, dans lequel lesdits plusieurs angles comprennent des angles compris entre -45° et 45°, et mieux encore entre -30° et 30°.

3. Chariot de soudage (10) selon la revendication 1 ou la revendication 2, dans lequel lesdites roues dans les deux ensembles de roues sont des roues magnétiques.

4. Chariot de soudage (10) selon l'une quelconque des revendications 1 à 3, comprenant en outre un dispositif de capteur (60) agencé de manière à détecter la position et la direction d'un joint (95) à souder.

5. Chariot de soudage (10) selon la revendication 4, dans lequel le dispositif de capteur (60) est un dispositif de capteur laser (60) qui est agencé de manière à émettre au moins deux faisceaux laser et à détecter des réflexions desdits au moins deux faisceaux laser à partir d'une pièce (90).

6. Chariot de soudage (10) selon l'une quelconque des revendications 1 à 3, comprenant en outre des moyens pour détecter de façon tactile la position d'un rail placé le long d'un joint (95) à souder.

7. Chariot de soudage (10) selon la revendication 4, comprenant en outre un dispositif de soudage, et dans lequel les moyens de processeur (50) sont agencés de manière à commander des paramètres de soudage dudit dispositif de soudage sur la base de mesures géométriques du joint en utilisant ledit dispositif de capteur laser.

8. Chariot de soudage (10) selon la revendication 7, dans lequel la commande des paramètres de soudage est basée sur un modèle mathématique, ledit modèle mathématique étant soit empirique, soit basé sur des lois générales de la physique, soit une combinaison de ceux-ci.

9. Procédé (100) pour commander un chariot de soudage (10) comprenant deux ensembles de roues (20, 30), dans lequel chaque roue dans les deux ensembles de roues (20, 30) pivote autour d'un essieu (15), des moyens de processeur (50) et des moyens (40) pour supporter un dispositif de soudage, dans lequel les moyens de processeur (50) commandent les roues dans un premier ensemble de roues indépendamment des roues dans l'autre ensemble de roues, dans lequel les deux ensembles de roues comprennent un ensemble gauche de roues et un ensemble droit de roues, **caractérisé en ce que** le procédé comprend en outre la flexion des essieux des roues dans chaque ensemble de roues de manière à ce qu'ils se positionnent selon un angle (v) par rapport à un côté inférieur et/ou supérieur du chariot de soudage, dans lequel ledit angle (v) est différent de zéro.

10. Procédé (100) selon la revendication 9, dans lequel ledit angle (v) est un angle qui est compris entre -45° et 45°, de préférence entre -30° et 30°, et mieux encore entre 0° et 30°.

11. Procédé (100) selon la revendication 9 ou la revendication 10, comprenant en outre les étapes d'émission d'au moins deux faisceaux laser à partir d'un dispositif de capteur laser (60) sur le chariot de soudage (10), et de détection des réflexions desdits au moins deux faisceaux laser à partir d'une pièce (90) au moyen dudit dispositif de capteur laser.

12. Procédé (100) selon l'une quelconque des revendications 9 à 11, comprenant en outre une étape de détection tactile de la position d'un rail placé le long d'un joint à souder.

13. Procédé (100) selon la revendication 12, comprenant en outre l'émission d'un faisceau laser et la détection de réflexions dudit faisceau laser à partir d'une pièce au moyen d'un dispositif de capteur laser.

14. Procédé (100) selon la revendication 11, comprenant en outre l'étape de commande de paramètres de soudage d'un dispositif de soudage (70) supporté par le chariot de soudage (10) sur la base de détections desdites réflexions à partir d'une pièce (90) exécutée au moyen dudit dispositif de capteur laser (60), dans lequel l'étape de commande des paramètres de soudage est exécutée au moyen desdits moyens de processeur (50).

15. Procédé (100) selon la revendication 14, dans lequel l'étape de commande de paramètres de soudage est basée sur un modèle mathématique, ledit modèle mathématique étant soit empirique, soit basé sur des lois générales de la physique, soit une combinaison de ceux-ci.
